# EUROPEAN PATENT APPLICATION

(11) **EP 3 654 001 A1**
(43) Date of publication of application: **20.05.2020**
(21) Application number: 19250005.6
(22) Date of filing: 14.05.2019
(51) Int. Cl.: G01F 23/292

(54) **LIQUID LEVEL DETECTION SYSTEM AND LIQUID LEVEL DETECTION METHOD**

(30) Priority: 15.11.2018 WO PCT/CN2018/115616
(71) Applicant: Hizero Technologies Co., Ltd., Shenzhen, Guangdong 518000 (CN)
(72) Inventor: Li, Yang, Shenzhen, Guangdong 518000 (CN)
(74) Representative: Reid, Alexandra Kathleen

(57) **Abstract**

A liquid level detection system and a liquid level detection method comprising a light source (1), a light guiding medium (2), a photoelectric conversion receiver (3) and a processing module (4) is provided. The light guiding medium has an incident surface (21), a first reflection surface (22), and an exiting surface (23). The first reflection surface (22) comprises a first sub-reflection surface (22a) and a second sub-reflection surface (22b), with a liquid surface (90) as a boundary line. When the light beam is incident on the first and second sub-reflection surfaces (22a and 22b) at the same angle, the refraction angle and light intensity loss is different, so there is an abrupt change in in the generated light intensity image. The position of the abrupt change is the position of the liquid surface (90). The position of the liquid surface (90) can thereby be obtained according to the position of abrupt change in light intensity after the light beam passes through the light guiding medium.

## Description

### FIELD OF THE DISCLOSURE

This disclosure relates to the field of liquid level position detection, in particular to a liquid level detection system and a liquid level detection method.

### BACKGROUND OF THE DISCLOSURE

Liquid level is one of the most important and common measurement parameters in industrial processes. The measurement of liquid level mainly refers to measurement technology for measuring vapor-liquid, liquid-liquid and liquid-solid interfaces, which are widely used in liquid storage equipment such as chemical, petroleum, and power plants. The existing liquid level measurement methods include pressure level measurement methods, floating level liquid measurement methods, capacitance liquid level measurement methods, ultrasonic liquid level measurement methods, etc. The above measurement methods have low resolution, large errors, or the inability to perform measurements when the liquid density or temperature changes or when the liquid is otherwise affected by the environment.

### SUMMARY OF THE DISCLOSURE

The technical problem to be solved by the present disclosure is to provide a liquid level detection system and a liquid level detection method that can improve the accuracy of liquid level position measurements. In order to solve the above technical problem, embodiments of the present disclosure provide a liquid level detection system comprising a light source, a light guiding medium, a photoelectric conversion receiver, and a processing module. The light guiding medium has an incident surface, a first reflection surface, and an exiting surface. The incident surface, the first reflection surface, and the exiting surface are all planar. The first reflection surface intersects a liquid surface, and the first reflection surface includes a first sub-reflection surface and a second sub-reflection surface, with the liquid surface as a boundary line.

A light beam emitted by the light source is emitted into the light guiding medium through the incident surface, then incident on the first reflection surface, and finally emitted from the light guiding medium through the exiting surface and incident on the photoelectric conversion receiver. The light beam is incident at the same angle on the first sub-reflection surface, the second sub-reflection surface, and a boundary between the first sub-reflection surface and the second sub-reflection surface.

The processing module is configured to generate a light intensity image according to the light intensity received by the photoelectric conversion receiver and to calculate a liquid level position according to a position of an abrupt change in the light intensity image.

Wherein, the light beam emitted by the light source is perpendicular to the incident surface.

Wherein, the light beam is totally reflected by the first sub-reflection surface and reflected and refracted by the second sub-reflection surface.

Wherein, the light source is fixedly disposed relative to the light guiding medium, and the light beam emitted by the light source is parallel light. The light beam is simultaneously incident on the first sub-reflection surface, the second sub-reflection surface, and a boundary between the first sub-reflection surface and the second sub-reflection surface; or wherein the light source is mounted on a first linear moving mechanism, and the light source is linearly moved relative to the light guiding medium by the first linear moving mechanism to sequentially emit the light beam onto the first sub-reflection surface and the second sub-reflection surface.

Wherein, the photoelectric conversion receiver is fixedly disposed relative to the light guiding medium, and a light beam receiving portion of the photoelectric conversion receiver is planar and can simultaneously receive the light beams reflected by the first sub-reflection surface and the second sub-reflection surface; or wherein the photoelectric conversion receiver is connected to a second linear moving mechanism, and the photoelectric conversion receiver is linearly moved relative to the light guiding medium by the second linear moving mechanism to sequentially receive the light beams reflected by the first sub-reflection surface and the second sub-reflection surface.

Wherein, the light guiding medium further has a second reflection surface, and the light beam is reflected by the second reflection surface and then emitted through the exiting surface.

Wherein, the first reflection surface and the second reflection surface are axisymmetric, and the axis of symmetry of the two surfaces is perpendicular to the liquid surface. The light beam reflected by the first reflection surface is directed parallel to the liquid surface toward the second reflection surface, and the second reflection surface intersects the liquid surface.

Wherein, the second reflection surface includes a third sub-reflection surface and a fourth sub-reflection surface with the liquid surface as a boundary line. The light beam is totally reflected by the third sub-reflection surface and reflected and refracted by the fourth sub-reflection surface.

Wherein, the first reflection surface is perpendicular to the second reflection surface.

Wherein, the light guiding medium is a right-angle isosceles prism, two right angle surfaces respectively form the first reflection surface and the second reflection surface, and the exiting surface and the incident surface are formed on a hypotenuse of the right-angle isosceles prism.

Wherein, the incident surface and the exiting surface are on the same plane.

Wherein, the light beam in the light guiding medium that is incident on the exiting surface is perpendicular to the exiting surface.

Wherein, the light guiding medium is a right-angle isosceles prism, two right angle surfaces respectively form an exiting surface and an incident surface, and the first reflection surface is formed on a hypotenuse of a right-angle isosceles prism.

The disclosure also provides a liquid level detection method, comprising the following steps: providing a light guiding medium having an incident surface, a first reflection surface, and an exiting surface, wherein, the incident surface, the first reflection surface, and the exiting surface are planar; positioning the light guiding medium at a liquid surface, the first reflection surface intersecting the liquid surface and the first reflection surface comprising a first sub-reflection surface and a second sub-reflection, with the liquid surface as a boundary line; and emitting a light beam into the light guiding medium through the incident surface, which is then incident on the first reflection surface, and finally emitted from the light guiding medium through the exiting surface. The light beam is incident at the same angle on the first sub-reflection surface, the second sub-reflection surface, and a boundary between the first sub-reflection surface and the second sub-reflection surface.

A light intensity image is generated based on the light intensity of the light beam emitted from the exiting surface, and a position of the liquid surface is obtained from a position of an abrupt change in the light intensity image.

Wherein, the light beam is totally reflected by the first sub-reflection surface and reflected and refracted by the second sub-reflection surface.

Wherein, the light guiding medium further has a second reflection surface, the second reflection surface intersecting the liquid surface, and the second reflection surface comprising a third sub-reflection surface and a fourth sub-reflection surface with the liquid surface as a boundary line. The light beam is totally reflected by the first sub-reflection surface and is totally reflected by the third sub-reflection surface and is then incident on the exiting surface. The light beam that is reflected by the second sub-reflection surface is reflected and refracted by the fourth sub-reflection surface, and the light beam reflected by the fourth sub-reflection surface is emitted toward to the exiting surface.

Wherein, the exiting surface and the incident surface are both disposed parallel to the liquid surface.

Wherein, the light beam is incident on the light guiding medium perpendicular to the incident surface, and the light beam emitted through the exiting surface is perpendicular to the incident surface.

Wherein, the light beam is simultaneously incident on the first sub-reflection surface, the second sub-reflection surface, and a boundary between the first sub-reflection surface and the second sub-reflection surface; or wherein the light beam is movably emitted onto the first sub-reflection surface and the second sub-reflection surface in sequence.

Wherein, the photoelectric conversion receiver can be fixedly disposed relative to the light guiding medium and a light beam receiving portion of the photoelectric conversion receiver can be planar, and can simultaneously receive all the light beams emitted from the exiting surface, or wherein the photoelectric conversion receiver is disposed to move relative to the light guiding medium, and the photoelectric conversion receiver receives the light beam reflected by the first sub-reflection surface and the second sub-reflection surface.

According to the liquid level detection system and the liquid level detection method provided by the present disclosure, the light guiding medium is located at a position of a liquid surface, and the liquid surface divides the first reflection surface into the first sub-reflection surface and the second sub-reflection surface. When the light beam is incident on the first sub-reflection surface and the second sub-reflection surface, the angle of refraction is different and the light intensity loss is different, such that the light beam incident on the photoelectric conversion receiver through the first sub-reflection surface and the second sub-reflection surface is different. The light intensity curve in the light intensity image generated by the processing module has an abrupt change, where the position of the abrupt change corresponds to the position of the boundary line between the first sub-reflection surface and the second sub-reflection surface, which is also the position of the liquid surface. Therefore, the position of the liquid level can be obtained according to the position of the abrupt change in light intensity after the light beam passes through the light guiding medium. Even if the liquid density or the temperature changes or the liquid is otherwise affected by the environment, the light beam still has a light intensity change at the boundary of the first and second sub-reflection surfaces, thus ensuring test accuracy.

### BRIEF DESCRIPTION OF THE DRAWINGS

In order to more clearly explain the embodiments of the present disclosure or the technical solutions relative to the prior art, the drawings used in the embodiments or the description of the prior art will be briefly described below. Obviously, the drawings in the following description are only some embodiments of the present disclosure. For those skilled in the art, drawings of other embodiments can also be obtained based on these drawings without any creative work.
Fig. 1 is a schematic view of a structure of a liquid level detection system according to a first embodiment of the present disclosure;
Fig. 2 is a schematic view of a structure of a liquid level detection system according to a second embodiment of the present disclosure;
Fig. 3 is a schematic view of a structure of a liquid level detection system according to a third embodiment of the present disclosure;
Fig. 4 is a schematic diagram of a structure of a liquid level detection system according to a fourth embodiment of the present disclosure; and
Fig. 5 is a schematic diagram of a structure of a liquid level detection system according to a fifth embodiment of the present disclosure.

### DETAILED DESCRIPTION OF THE EMBODIMENTS

The technical solutions in the embodiments of the present disclosure will be clearly and completely described in the following with reference to the accompanying drawings.

A liquid level detection system provided by a preferred embodiment of the present disclosure comprises a light source 1, a light guiding medium 2, a photoelectric conversion receiver 3, and a processing module 4. The light source 1 emits a light beam into the light guiding medium 2, the light beam is converted by the light guiding medium 2, then emitted from the light guiding medium 2, and enters the photoelectric conversion receiver 3. The photoelectric conversion receiver 3 can photo-electrically convert the received light beam, that is, convert the light intensity signal into an electrical signal. The processing module 4 analyzes the converted electrical signal to generate a light intensity image and calculates a liquid level position according to a position of an abrupt change in the light intensity image.

The light guiding medium 2 has an incident surface 21, a first reflection surface 22, and an exiting surface 23. The incident surface 21, the first reflection surface 22, and the exiting surface 23 are all planar, and the first reflection surface 22 intersects the liquid surface 90. The first reflection surface 22 includes a first sub-reflection surface 22a and a second sub-reflection surface 22b having a liquid surface 90 as a boundary line. The light beam emitted from the light source 1 is emitted into the light guiding medium 2 through the incident surface 21, then further incident on the first reflection surface 22, and finally emitted from the light guiding medium 2 through the exiting surface 23 and incident on the photoelectric conversion receiver 3. The light beam is incident at the same angle on the first sub-reflection surface 22a, the second sub-reflection surface 22b, and the boundary between the first sub-reflection surface 22a and the second sub-reflection surface 22b. The processing module 4 is configured to generate a light intensity image according to the light intensity received by the photoelectric conversion receiver 3 and calculate the position of the liquid surface 90 according to the position of the abrupt change in the light intensity image.

In use, the light guiding medium 2 is located at the position of the liquid surface 90, and the liquid surface 90 divides the first reflection surface 22 of the light guiding medium 2 into the first sub-reflection surface 22a and the second sub-reflection surface 22b. The two sides of the first sub-reflection surface 22a face the light guiding medium 2 and air respectively, and the two sides of the second sub-reflection surface 22b face the light guiding medium 2 and liquid respectively. The light beams are incident on the first sub-reflection surface 22a and the second sub-reflection surface 22b at the same angle. When the refraction angle is different, the light intensity loss is different, and thus the light intensity of the light beam incident on the photoelectric conversion receiver 3 via the first sub-reflection surface 22a and the second sub-reflection surface 22b is different. The intensity curve in the light intensity image generated by the processing module 4 has an abrupt change, where the position of the abrupt change corresponds to the position of the boundary line between the first and second sub-reflection surfaces, which also is the position of the liquid surface 90. The light intensity can be determined according to the light beam passing through the light guiding medium 2. Therefore, the position of the liquid surface 90 can obtained according to the position of the abrupt change in light intensity after the light beam passes through the light guiding medium 2. Even if the liquid density or temperature changes or the liquid is otherwise affected by the environment, the light beam will still produce a change in light intensity at the boundary of the first and second sub-reflection surfaces, thus ensuring test accuracy.

Preferably, the light source 1 is an infrared light source conducive for reception and photoelectric conversion.

Preferably, the light beam emitted by the light source 1 is perpendicular to the incident surface 21, which can reduce the loss of light intensity at the incident surface 21 due to refraction and facilitate the illumination of the light beam on the first reflection surface 22 at a predetermined angle. In other embodiments, the light beam may be incident on the incident surface 21 at other angles. The incident angle of the light beam on the first reflection surface 22 is preferably a critical angle of the refractive index between the light guiding medium 2 and the air to facilitate the refraction of the light beam at the second sub-reflection surface 22b between the light guiding medium 2 and the liquid to increase the loss of light intensity.

The light beam is totally reflected by the first sub-reflection surface 22a and reflected and refracted by the second sub-reflection surface 22b. The light beam is prevented from being refracted by the first sub-reflection surface 22a, thus increasing the difference in light intensity of the reflected beam between the first sub-reflection surface 22a and the second sub-reflection surface 22b and making it easier to later determine the position of the liquid surface 90 according to a position of the abrupt change in the light intensity. Here, the angle at which the light beam is incident on the first reflection surface 22 can be determined according to the refractive index of the light guiding medium 2, so that the light beam is fully reflected by the first sub-reflection surface 22a and reflected and refracted by the second sub-reflection surface 22b.

Preferably, the light beam incident on the exiting surface 23 in the light guiding medium 2 is perpendicular to the exiting surface 23 to reduce the light intensity loss of the light beam at the exiting surface 23. In other embodiments, the light beam directed at the exiting surface 23 may be emitted from the exiting surface 23 at other angles.

The exiting surface 23 and the incident surface 21 can be arranged in parallel in order to facilitate the processing and forming of the light guiding medium 2, which is advantageous for the emitting angle control. Further, the exiting surface 23 and the incident surface 21 may be located on the same plane, which may further advantageously facilitate the processing and preparation of the light guiding medium 2 and ensure that the exiting surface 23 and the incident surface 21 are parallel to each other.

The light guiding medium 2 further has a second reflection surface 24, and the light beam is reflected by the second reflection surface 24 and then emitted through the exiting surface 23. The second reflection surface 24 can be used to reflect the light beam toward the exiting surface 23. Of course, in other embodiments, the second reflection surface 24 may not be provided, and the light beam is reflected by the first reflection surface 22 and directly emitted through the exiting surface 23.

The first reflection surface 22 and the second reflection surface 24 are axisymmetric, the axis of symmetry of the two is perpendicular to the liquid surface 90. The second reflection surface 24 intersects the liquid surface 90, and the second reflection surface 24 is divided by the liquid surface 90 to form a third sub-reflection surface 24a and the fourth sub-reflection surface 24b, with the liquid surface 90 as the boundary line. The light beam reflected by the first reflection surface 22 is parallel to the liquid surface 90. The light beam reflected by the first sub-reflection surface 22a can be directed toward the third sub-reflection surface 24a, which is then incident on the exiting surface 23. The light beam reflected by the second sub-reflection surface 22b is incident on the fourth sub-reflection surface 24b and is then incident on the exiting surface 23. Since the axis of symmetry of the first reflection surface 22 and the second reflection surface 24 is perpendicular to the liquid surface 90, the light beam is fully reflected by the first sub-reflection surface 22a and then fully reflected by the third sub-reflection surface 24a. The light beam refracts and reflects at the second sub-reflection surface 22b and also refracts and reflects at the fourth sub-reflection surface 24b, which can increase the loss of light intensity at a position below the liquid surface 90. This increase the light intensity difference of the light beam at the boundary line of liquid surface 90, thereby increasing the abruptness of the change, which is helpful to accurately obtain the position of liquid surface 90.

In this embodiment, more specifically, the light guiding medium 2 is a right-angle isosceles prism, and the two right angle surfaces respectively form a first reflection surface 22 and a second reflection surface 24. A hypotenuse surface is disposed parallel to the liquid surface 90, and the exiting surface 23 and the incident surface 21 are both formed on the hypotenuse surface of the right-angle isosceles prism. That is, the incident surface 21 and the exiting surface 23 are on the same plane, and the first reflection surface 22 is perpendicular to the second reflection surface 24. The light guiding medium 2 has a simple overall structure and is favorable for processing and forming.

Further, the light beam emitted from the light source 1 is a parallel light, and the light beam is simultaneously incident on the first sub-reflection surface 22a, the second sub-reflection surface 22b, and the boundary between the first sub-reflection surface 22a and the second sub-reflection surface 22b. A light beam receiving portion of the photoelectric conversion receiver 3 may be planar and simultaneously receive the light beams reflected by the first sub-reflection surface 22a and the second sub-reflection surface 22b to generate a light intensity image.

In the liquid level detection system provided in this embodiment, the light guiding medium 2 is placed in a liquid container, and the top surface (the hypotenuse surface of the right angle isosceles prism) of the light guiding medium 2 is located below the light source 1 and the photoelectric conversion receiver 3 and placed parallel to the liquid surface 90. The light source 1 and the photoelectric conversion receiver 3 are located in a straight line and perpendicular to an edge of the light guiding medium 2. The light beam is perpendicularly incident onto the right-angle isosceles prism and intersects with a right-angle surface, which is the first reflection surface. When the intersection point is above the liquid surface 90 (i.e., the light beam is incident on the first sub-reflection surface 22a) the light beam is totally reflected at the intersection point. The light beam is totally reflected again on an opposite side of the light guiding medium 2 (i.e., the third sub-reflection surface 24a), and finally the light beam is transmitted through the light guiding medium 2 and received by the photoelectric conversion receiver 3. When the intersection point is below the liquid surface 90, the light beam is incident on the second sub-reflection surface 22b and the fourth sub-reflection surface 24b, which do not totally reflect the light beam, causing two reflections and refractions two occur. Finally, the reflected light is transmitted through the light guiding medium 2 and is incident on the photoelectric conversion receiver 3. This makes the intensity of the light collected by the photoelectric conversion receiver 3 relatively weak. The image signal is therefore abruptly changed at the corresponding position of the liquid surface 90, and this characteristic of the light intensity signal is reflected in the image signal acquired by the photoelectric converter. The position of the liquid surface 90 can be determined by the output value of the intensity signal of the photoelectric conversion receiver 3.

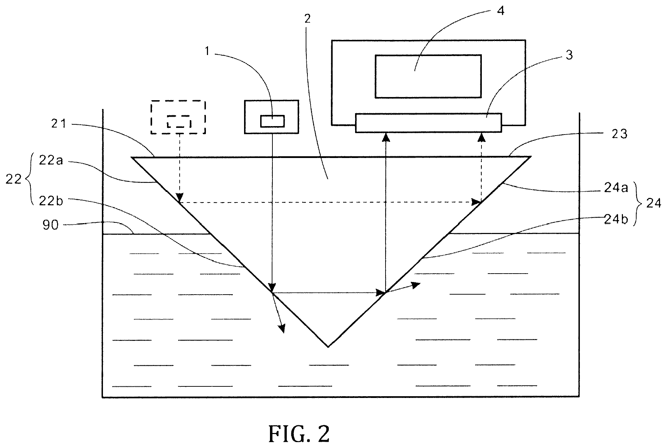

In the above embodiment, the light source 1 can be fixedly disposed relative to the light guiding medium 2. As shown in Fig. 2, in a liquid level detection system provided by the second embodiment of the present disclosure, the light source 1 can be a moveable light source 1. The light source 1 is mounted on a first linear moving mechanism (not shown), and the light source 1 is linearly moved relative to the light guiding medium 2 by the first linear moving mechanism to sequentially emit the light beam onto the first sub-reflection surface 22a and second sub-reflection surface 22b. The photoelectric conversion receiver 3 may be stationary, and the light beam receiving portion may be planar and sequentially receive the light beams reflected by the first sub-reflection surface 22a and the second sub-reflection surface 22b.

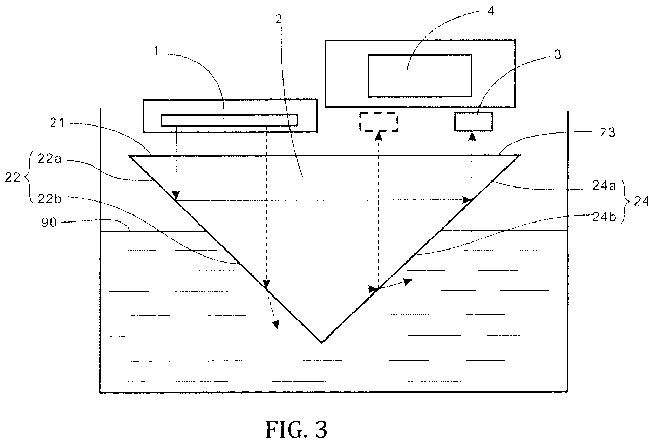

In the above embodiments, the photoelectric conversion receivers 3 are each fixedly disposed relative to the light guiding medium 2, and the light beam receiving portion is planar and can simultaneously receive the light beams reflected by the first sub-reflection surface 22a and the second sub-reflection surface 22b. As another embodiment, the photoelectric conversion receiver 3 can also be configured to be movable. As shown in Fig. 3, in a liquid level detection system according to a third embodiment of the present disclosure, the light beam emitted by the light source 1 is a parallel light, and the light beam is simultaneously incident on a first sub-reflection surface 22a, a second sub-reflection surface 22b, and a boundary between the first sub-reflection surface 22a and the second sub-reflection surface 22b. The photoelectric conversion receiver 3 is connected to a second linear moving mechanism (not shown in the figures). The photoelectric conversion receiver 3 is driven by the second linear moving mechanism to linearly move relative to the light guiding medium 2 to sequentially receive the light beams reflected by the first sub-reflection surface 22a and the second sub-reflection surface 22b. The light guiding medium 2 of the system can be the same as the first embodiment, and details are not described herein again.

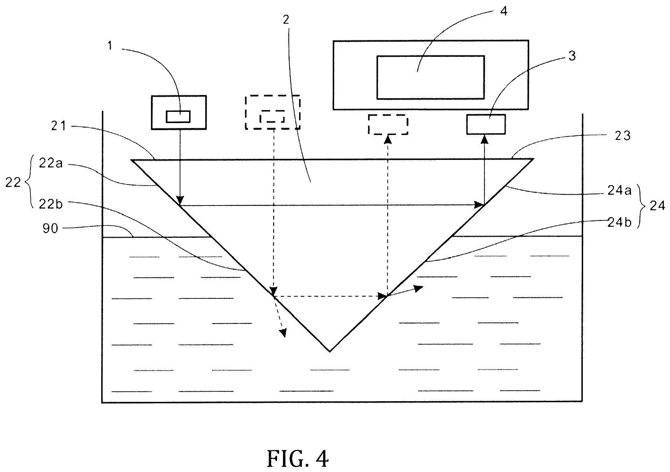

As shown in Fig. 4, in a liquid level detection system according to a fourth embodiment of the present disclosure, the light guiding medium 2 is the same as that of the first embodiment, and the light source 1 is mounted on a first linear moving mechanism (not shown). The light source 1 is linearly moved by the first linear moving mechanism to sequentially emit light beams onto the first sub-reflection surface 22a and the second sub-reflection surface 22b. The photoelectric conversion receiver 3 is connected to a second linear moving mechanism, and the photoelectric conversion receiver 3 is linearly moved by the second linear moving mechanism to sequentially receive the reflection from the first sub-reflection surface 22a and the second sub-reflection surface 22b. The light beam, the light source 1, and the photoelectric conversion receiver 3 move at the same speed so as to be able to correspondingly receive the reflected light beam. The first linear moving mechanism and the second linear moving mechanism can be driven by the same motor to ensure that the moving speeds of the two mechanisms are the same.

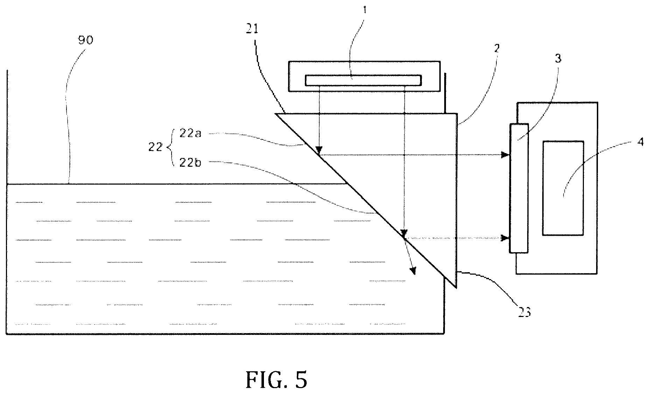

As shown in Fig. 5, a liquid level detection system according to a fifth embodiment of the present disclosure is provided. The incident surface 21 and the first reflection surface 22 of the light guiding medium 2 are the same as those of the previous embodiment and are not described herein again. Different from the foregoing embodiments, in this embodiment, the second reflection surface is not disposed on the light guiding medium 2, an angle is formed between the exiting surface 23 and the incident surface 21 instead of being disposed in parallel, and the light beam that passes through the first reflection surface 22 is directly emitted through the exiting surface 23 after being reflected by the first reflection surface 22. The light guiding medium 2 can be mounted on the side of the container, and the exiting surface 23 can be located at an outer side of the container. The photoelectric conversion receiver 3 is disposed corresponding to the exiting surface 23, and the photoelectric conversion receiver 3 is located outside a wall of the container. Here, if the wall of the container is made of a transparent material, the exiting surface 23 may be located inside the container, and the light beam emitted from the exiting surface 23 may be directed toward the photoelectric conversion receiver 3. The exiting surface 23 and the incident surface 21 may be disposed perpendicularly. Specifically, the light guiding medium 2 is a right-angle isosceles prism, the two right angle surfaces respectively form an exiting surface 23 and an incident surface 21, and the first reflection surface 22 is formed on the hypotenuse of the right-angle isosceles prism.

The light source 1 may be fixedly disposed as in the first embodiment or may be linearly moved as in the second embodiment, and the photoelectric conversion receiver 3 may be fixedly disposed as in the first embodiment or may be linearly moved as in the third embodiment.

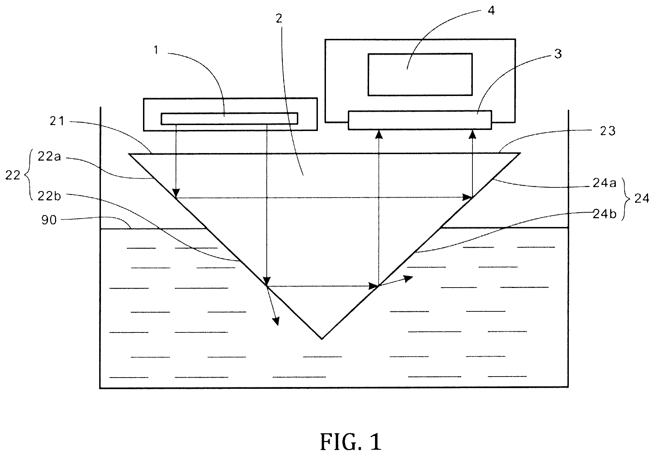

In the linear movement mechanisms in the second to fourth embodiments described above, various known linear movement mechanisms can be used, such as a motor-driven ball screw mechanism, a rack and pinion mechanism, or a cylinder, etc. Referring to Fig. 1, the present disclosure further provides a liquid level detection method corresponding to the liquid level detection system, which includes the following.

A light guiding medium 2 is provided. The light guiding medium 2 has an incident surface 21, a first reflection surface 22, and an exiting surface 23. The incident surface 21, the first reflection surface 22, and the exiting surface 23 are all planar. The light guiding medium 2 is placed at the liquid surface 90, and the first reflection surface 22 intersects the liquid surface 90. The first reflection surface 22 includes a first sub-reflection surface 22a and a second sub-reflection surface 22b, with the liquid surface 90 as a boundary line. The light beam is emitted onto the light guiding medium 2 through the incident surface 21, is incident on the first reflection surface 22, and finally emitted from the light guiding medium 2 through the exiting surface 23. The light beam is incident at the same angle on the first sub-reflection surface 22a, the second sub-reflection surface 22b and the boundary between the first sub-reflection surface 22a and the second sub-reflection surface 22b.

A light intensity image is generated according to the light intensity of the light beam emitted from the exiting surface 23, and the position of the liquid surface 90 is obtained from a position of the abrupt change in the light intensity image. Here, the electrical signal of the photoelectric conversion receiver 3 can be processed by the processing module 4 to generate the light intensity image.

The light guiding medium 2 is located at the position of the liquid surface 90, and the liquid surface 90 divides the first reflection surface 22 of the light guiding medium 2 into a first sub-reflection surface 22a and a second sub-reflection surface 22b. The first sub-reflection surface 22a is located above the liquid surface 90, and the two sides thereof are adjacent to the light guiding medium 2 and the air, respectively. The second sub-reflection surface 22b is located below the liquid surface 90, and the two sides are adjacent to the light guiding medium 2 and the liquid, respectively. When the light beams are incident on the first sub-reflection surface 22a and the second sub-reflection surface 22b at the same angle, the angle of refraction is different and the light intensity loss is different. Thus, the light beam emitted from the exiting surface 23 after being reflected by the first sub-reflection surface 22a and the second sub-reflection surface 22b are different in light intensity. On the generated light intensity image, the light intensity curve has an abrupt change, where the position of the abrupt change corresponds to the position of the boundary line between the first sub-reflection surface 22a and the second sub-reflection surface 22b, which is also the liquid surface 90. The position of the liquid surface 90 can be derived from the position of the abrupt change in light intensity after the light beam passes through the light guiding medium 2. Even if the liquid density or the temperature changes or the liquid is otherwise affected by the environment, the light beam still produces a change in light intensity at the boundary of the first sub-reflection surface 22a and the second sub-reflection surface 22b, thereby ensuring test accuracy. Here, the light intensity emitted from the exiting surface 23 can be received by the photoelectric conversion receiver 3, and the photoelectric conversion receiver 3 is electrically connected to the processing module 4. The light intensity image is generated by the processing module 4, and the position of the liquid surface 90 can be determined.

The light beam is totally reflected by the first sub-reflection surface 22a and reflected and refracted by the second sub-reflection surface 22b. It is possible to avoid the loss of light intensity due to refraction of the light beam at the first sub-reflection surface 22a. Increasing the difference in light intensity of the reflected beam between the first sub-reflection surface 22a and the second sub-reflection surface 22b is advantageous for determining the position of the liquid surface 90 according to the position of the abrupt change of the light intensity. Here, the angle at which the light beam is incident on the first reflection surface 22 can be determined according to the index of refraction of the light guiding medium 2 and the liquid, so that the light beam is totally reflected by the first sub-reflection surface 22a, and reflected and refracted by the second sub-reflection surface 22b.

The structure of the light guiding medium 2 can be the same as that of the first embodiment or the fifth embodiment. In the present embodiment, the structure of the light guiding medium 2 is as shown in Fig 1. When the light beam is received in the light guiding medium 2 through the incident surface 21, the light beam can be incident perpendicular to the incident surface 21 to reduce the light intensity loss of the light beam at the exiting surface 23. The light beam directed at the exiting surface 23 may be perpendicular to the exiting surface 23 to reduce the loss of light intensity at the exiting surface 23 of the light beam.

In this embodiment, the light guiding medium 2 further has a second reflection surface 24, and the first reflection surface 22 and the second reflection surface 24 have an axisymmetric structure. The axis of symmetry of the two is perpendicular to the liquid surface. The light beam reflected by the first reflection surface 22 is incident on the second reflection surface 24 parallel to the liquid surface 90, and the second reflection surface 24 intersects the liquid surface 90. The second reflection surface 24 includes a third sub-reflection surface 24a and a second sub-reflection surface 24b, with the liquid surface 90 as a boundary line. The light beam is totally reflected by the first sub-reflection surface 22a, then totally reflected by the third sub-reflecting surface 24a, and then incident on the exiting surface 23. The light beam reflected by the second sub-reflection surface 22b is reflected and refracted on the fourth sub-reflection surface 24b. The light beam reflected by the fourth sub-reflection surface 24b is incident on the exiting surface 23.

The light beam can be reflected twice in the light guiding medium 2. Where the light beam is totally reflected twice, once on the first sub-reflection surface 22a and again the third sub-reflection surface 24a above the liquid surface of the first reflection surface 22, the light intensity loss is relatively small. Where the light beam has two reflections and two refractions, once on the second sub-reflection surface 22b and again on the fourth sub-reflection surface 24b, the light intensity loss is large. From the light intensity image generated by the light beam emitted from the exiting surface, a position of an abrupt change of the light beam between the liquid surface and the liquid surface can be clearly obtained, so that the position of the liquid surface can be determined.

In this embodiment, the light beam can be simultaneously incident on the first sub-reflection surface 22a, the second sub-reflection surface 22b, and the boundary between the two surfaces 22a and 22b. The photoelectric conversion receiver 3 can be fixedly disposed relative to the light guiding medium 2, the light beam receiving portion of the photoelectric conversion receiver can be planar, and all the beams emitted from the exiting surface 23 can be simultaneously received. In other embodiments, the photoelectric conversion receiver 3 can be disposed relative to the light guiding medium 2, the receiving surface can be relatively small, and the photoelectric conversion receiver 3 can be linearly moved by the linear moving mechanism to sequentially receive light reflected from the first sub-reflection surface 22a and the second sub-reflection surface 22b. In addition, the light source 1 may be movably disposed such that the light beam is movably incident on the first sub-reflection surface 22a and the second sub-reflection surface 22b in sequence.

In the above embodiments, the "liquid level" is referred to as the interface between the liquid and the gas. In other embodiments, the "liquid level" may also be the interface between different liquids.

The above embodiments do not constitute a limitation on the scope of protection of the technical solutions. Any modifications, equivalent substitutions and improvements made within the spirit and principles of the above-described embodiments are intended to be included within the scope of the technical solutions.

## Claims

1. A liquid level detection system, comprising:
a light source;
a light guiding medium;
a photoelectric conversion receiver; and
a processing module, wherein:
the light guiding medium has an incident surface, a first reflection surface, and an exiting surface,
the first reflection surface and the exiting surface are both planar,
the first reflection surface intersects a liquid surface,
the first reflection surface comprises a first sub-reflection surface and a second sub-reflection surface, with the liquid surface as a boundary line between the first sub-reflection surface and the second sub-reflection surface,
a light beam emitted by the light source is emitted into the light guiding medium through the incident surface, incident on the first reflection surface, emitted from the light guiding medium through the exiting surface, and incident on the photoelectric conversion receiver,
the light beam is incident at a same angle on the first sub-reflection surface, the second sub-reflection surface, and a boundary between the first sub-reflection surface and the second sub-reflection surface, and
the processing module is configured to generate a light intensity image according to an intensity of the light beam received by the photoelectric conversion receiver and calculate a position of the liquid surface according to a position of an abrupt change in the light intensity image.

2. The liquid level detection system according to claim 1, wherein the light beam emitted by the light source is perpendicular to the incident surface.

3. The liquid level detection system according to claim 1, wherein the light beam is totally reflected by the first sub-reflection surface and reflected and refracted by the second sub-reflection surface.

4. The liquid level detection system according to claim 1, wherein:
the light source is fixedly disposed relative to the light guiding medium, the light beam emitted by the light source is a parallel light, and the light beam is simultaneously incident on the first sub-reflection surface, the second sub-reflection surface, and the boundary between the first sub-reflection surface and the second sub-reflection surface; or
the light source is mounted on a first linear moving mechanism, and the light source is linearly moved relative to the light guiding medium by the first linear moving mechanism to sequentially emit the light beam onto the first sub-reflection surface and the second sub-reflection surface.

5. The liquid level detection system according to claim 1, wherein:
the photoelectric conversion receiver is fixedly disposed relative to the light guiding medium, a light beam receiving portion of the photoelectric conversion receiver is planar, and a portion of the light beam reflected by the first sub-reflection surface and a portion of the light beam reflected by the second sub-reflection surface are simultaneously received by the light beam receiving portion; or
the photoelectric conversion receiver is connected to a second linear moving mechanism, and the photoelectric conversion receiver is linearly moved relative to the light guiding medium by the second linear moving mechanism to sequentially receive a portion of the light beam reflected by the first sub-reflection surface and a portion of the light beam reflected by the second sub-reflection surface.

6. The liquid level detection system according to claim 1, wherein:
the light guiding medium further has a second reflection surface, and
the light beam is reflected by the second reflection surface prior to being emitted from the light guiding medium through the exiting surface.

7. The liquid level detection system according to claim 6, wherein:
the first reflection surface and the second reflection surface are axisymmetric,
an axis of symmetry of the first reflection surface and the second reflection surface is perpendicular to the liquid surface, and
the light beam reflected by the first reflection surface is directed parallel to the liquid surface toward the second reflection surface, wherein the second reflection surface intersects the liquid surface.

8. The liquid level detection system according to claim 7, wherein:
the second reflection surface comprises a third sub-reflection surface and a fourth sub-reflection surface, with the liquid surface as the boundary line,
the light beam is totally reflected by the third sub-reflection surface and reflected and refracted by the fourth sub-reflection surface.

9. The liquid level detection system according to claim 7, wherein the first reflection surface is perpendicular to the second reflection surface.

10. The liquid level detection system according to claim 6, wherein:
the light guiding medium is a right-angle isosceles prism,
a first right-angle surface of the right-angle isosceles prism forms the first reflection surface and a second right angle surface of the right-angle isosceles prism forms the second reflection surface, and
the exiting surface and the incident surface are both formed on a hypotenuse of the right-angle isosceles prism.

11. The liquid level detection system according to claim 1, wherein the light beam in the light guiding medium that is incident on the exiting surface is perpendicular to the exiting surface.

12. The liquid level detection system according to claim 1, wherein:
the light guiding medium is a right-angle isosceles prism,
a first right-angle surface right angle isosceles prism forms the exiting surface and a second right angle surface of the right-angle isosceles prism forms the incident surface, and
the first reflection surface is formed on a hypotenuse of the right-angle isosceles prism.

13. A liquid level detection method, comprising:
providing a light guiding medium having an incident surface, a first reflection surface, and an exiting surface, wherein the incident surface, the first reflection surface, and the exiting surface are planar;
positioning the light guiding medium at a liquid surface, the first reflection surface intersecting the liquid surface, wherein the first reflection surface comprises a first sub-reflection surface and a second sub-reflection surface, with the liquid surface as a boundary line between the first sub-reflection surface and the second sub-reflection surface; and
emitting a light beam into the light guiding medium through the incident surface, which is then incident on the first reflection surface and emitted from the light guiding medium through the exiting surface, wherein:
the light beam is incident at a same angle at the first sub-reflection surface, the second sub-reflection surface, and a boundary between the first sub-reflection surface and the second sub-reflection surface,
a light intensity image is generated according to an intensity of the light beam emitted from the exiting surface, and
a position of the liquid surface is obtained from a position of an abrupt change in the light intensity image.

14. The liquid level detection method according to claim 13, wherein the light beam is totally reflected by the first sub-reflection surface and reflected and refracted by the second sub-reflection surface.

15. The liquid level detection method according to claim 14, wherein:
the light guiding medium further has a second reflection surface,
the second reflection surface intersects the liquid surface,
the second reflection surface comprises a third sub-reflection surface and a fourth sub-reflection surface, with the liquid surface as a boundary line between the third sub-reflection surface and the fourth sub-reflection surface,
a portion of the light beam that is reflected by the first sub-reflection surface is totally reflected by the third sub-reflection surface and is then incident on the exiting surface, and
a portion of the light beam that is reflected by the second sub-reflection surface is reflected and refracted by the fourth sub-reflection surface, and a portion of the light beam reflected by the fourth sub-reflection surface is directed toward the exiting surface.
